# EUROPEAN PATENT SPECIFICATION

(11) **EP 3 171 972 B1**
(45) Date of publication and mention of the grant of the patent: **10.07.2019**
(21) Application number: 15742113.2
(22) Date of filing: 17.07.2015
(51) Int. Cl.: B01F 9/00, B65G 47/54

(54) **APPARATUS FOR MOVING RECEPTACLES**
VORRICHTUNG ZUM BEWEGEN VON BEHÄLTERN
APPAREIL POUR LE DÉPLACEMENT DE RÉCEPTACLES

(30) Priority: 23.07.2014 IT UD20140126
(43) Date of publication of application: 31.05.2017
(73) Proprietor: COROB S.P.A., 41038 San Felice Sul Panaro (IT)
(72) Inventor: LUNGHINI, Marco, I-41031 Camposanto (IT); REGGIANI, Rodolfo, I-41037 Mirandola (IT)
(74) Representative: Petraz, Gilberto Luigi
(86) International application number: PCT/IB2015/055443
(87) International publication number: WO 2016/012923

(56) References cited:
- EP-A1- 0 478 212
- DE-A1- 3 539 723
- US-A- 4 278 381
- US-A- 6 158 566
- US-A1- 2006 188 358

## Description

### FIELD OF THE INVENTION

The present invention concerns an apparatus and a method for moving receptacles, in particular containing fluid dye products, such as liquid dyes, bases for paints, varnishes, enamels, inks or other fluid dye substances.

In particular, the present invention concerns an apparatus a method to move receptacles from and to a work unit configured to work each of said receptacles, such as for example a mixing unit.

### BACKGROUND OF THE INVENTION

It is known to make fluid dye products, contained inside receptacles, by the consecutive use of work units such as metering units and mixing units.

Known metering units are able to meter fluid products, such as for example dye pigments, and to join them with a base, for example a paint base.

Mixing units, also known as mixers, are able to mix fluid products together, such as for example dyes of different shades and colors, and/or added to a base substance to make up a varnish or a paint of a determinate color.

Known mixing units mix the fluid products by means of rotational movements, gyroscopic, orbital, vibrational or other, and normally include a rotary or vibrating unit which makes the receptacle in which the fluid products to be mixed are contained rotate or oscillate. The receptacle normally consists of a drum, a tin, a can or other, depending on the quantity of fluid product contained therein.

It is also known to use movement machines to automate the movements, and in general the production, of the fluid dye products. Known movement machines include feed units that operate by moving the receptacles in a direction of feed, adjacent to the work units. Known feed units are provided with a plurality of rolls rotating around an axis orthogonal to the direction of feed, or alternatively conveyor belts.

Work units generally face toward the feed unit and include a work chamber, like a mixing chamber, inside which the respective working occurs of the fluid dye products contained inside the receptacle.

Known movement machines also include movement devices which move the receptacles from the feed unit to the work chamber of the respective work apparatus: this is done automatically, without requiring any manual activity.

Known movement devices are generally configured to cooperate with the feed unit; in particular, when the receptacle is opposite the work chamber, it is moved automatically inside, thanks to said movement devices.

Known movement devices are generally provided with self-centering grippers, thrust mechanisms or other mechanisms functioning through suction, each of which operates on upper or lateral sides of the receptacle.

However, said movement devices can cause unexpected or sudden incidental movements during the movement of the receptacles, with a risk of the liquid product contained inside them leaking out.

Furthermore, known movement devices are generally designed to work only certain sizes and shapes of the receptacles, thus causing limitations to the versatility in use, with regard to the type of receptacles that can be used.

In fact it is known that, for both esthetic and functional reasons, receptacles can assume many different shapes and sizes which differ from the traditional cylindrical shape, complicating the automated movement of the receptacles by known movement devices, and making it impossible to make it versatile.

Documents US-A-6,158,566, DE-A-3539723 and US-A-2006/188358 describe apparatuses for moving, loading or transferring objects of a known type.

US-A-6,158,566 discloses an apparatus and a method for moving receptacles according to the preambles of claims 1 and 10.

There is therefore a need to perfect an apparatus and a method for moving receptacles that can overcome at least one of the disadvantages of the state of the art.

In particular, one purpose of the present invention is to obtain an apparatus and a method for moving receptacles that can adapt to the sizes and shapes of the receptacles while still allowing to move the receptacles in stable and safe conditions.

Another purpose is to obtain an apparatus and a method for moving receptacles that preserves the liquid product contained inside throughout the movement.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, forms of embodiment described here concern an apparatus for moving receptacles including a feed unit configured to feed the receptacles each lying with a respective bottom on a feed plane and in a direction of feed.

The movement apparatus also includes a movement device configured to move the receptacles from the feed unit to a work unit adjacent to the feed unit in the direction of feed.

In accordance with the invention, the movement device includes mobile lifting elements that define a movement plane provided to rest against the bottom of one of the receptacles, in order to pick up the receptacle from the feed unit by lifting it from below and moving it from the feed plane into the work unit.

The apparatus according to the present invention therefore allows to move the receptacle lifting it from below, without acting on the lateral walls and/or on the lid of the receptacle. In this way it is possible to guarantee its movement, supplying a stable resting plane, irrespective of the different sizes and shapes that the receptacle can have.

The apparatus according to the present invention can be adapted to use both in combination with a mixing unit, and with other work units, such as a metering unit.

According to the invention, the lifting elements are configured mobile between a lowered position in which the movement plane is below the feed plane and a raised position in which the movement plane is coplanar, or at least partly above, the feed plane, to pick up the receptacle from the feed unit.

Furthermore, according to the invention, the lifting elements are also configured mobile at least between the raised position and a laterally displaced position in the work unit, to position the receptacle in the work unit.

According to other forms of embodiment, the lifting elements are mobile in a first direction, transverse to the feed plane, by means of a first actuation member, and a second direction, transverse to the direction of feed, by means of a second actuation member.

The multiple directions of movement that can be actuated by the movement device according to the present description allow to move the receptacle in correspondence with the work unit, for example a mixer. Moreover, the different directions of movement allow to adapt to the position of the receptacle on the feed plane.

According to the present invention, the work unit, for example a mixer, includes a lower plate and an upper plate, configured to work the receptacle. The lower plate includes a contact layer on which to rest the receptacle, provided with grooves configured to receive inside them the lifting elements, able to move the receptacle. In possible implementations, the grooves have a depth that allows a disengagement travel of the lifting elements, to transfer the receptacle from a movement plane to the contact layer.

The shape and thickness of the contact layer allow the lifting elements to discharge the receptacle onto the lower plate, without causing drawing or blockages for example, which would lead to the receptacle overturning.

Another aspect of the present invention concerns a method for moving receptacles. According to the invention, the method comprises:
- feeding the receptacles by means of a feed unit, each receptacle lying with a respective bottom on a feed plane and in a direction of feed,
- moving the receptacles, by means of a movement device, from the feed unit to a work unit adjacent to the feed unit in the direction of feed.

Moreover, according to the present invention, the method provides to use mobile lifting elements of the movement device, defining a movement plane, to rest against the bottom of the one of the receptacles, and to pick up the receptacle from the feed unit by lifting it from below and moving it from the feed plane into the work unit.

The lifting elements are moved at least between a lowered position in which the movement plane is below the feed plane and a raised position in which the movement plane is coplanar, or at least partly above, the feed plane, in order to pick up the receptacle from the feed unit.

The lifting elements are also moved at least between the raised position and a laterally displaced position in the work unit. The receptacle is received on at least a lower plate provided in the work unit, resting the receptacle on a contact layer of the lower plate, receiving the lifting elements in grooves of the contact layer.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

### BRIEF DESCRIPTION OF THE DRAWINGS

These and other characteristics of the present invention will become apparent from the following description of a form of embodiment, given as a non-restrictive example with reference to the attached drawings wherein:
- fig. 1 is a perspective view of an apparatus for moving receptacles according to forms of embodiment described here, in an operating condition;
- fig. 2 is a perspective view of the apparatus in fig. 1, in another operating condition;
- fig. 3 is a perspective view of the apparatus in fig. 1, in yet another operating condition;
- fig. 4 is a perspective view of a component of the apparatus according to forms of embodiment described here;
- fig. 5 is a lateral view of fig. 4;
- fig. 6 is a perspective view of another component of the apparatus according to forms of embodiment described here;
- fig. 7 is a perspective view of a component of the apparatus according to forms of embodiment described here
- fig. 8 is a perspective view of the apparatus in fig. 1, in an operating condition.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment.

Before describing these forms of embodiment, we must also clarify that the present description is not limited in its application to details of the construction and disposition of the components as described in the following description using the attached drawings. The present description can provide other forms of embodiment and can be obtained or executed in various other ways. We must also clarify that the phraseology and terminology used here is for the purposes of description only, and cannot be considered as limitative. The use of terms such as "including", "comprising", "having" and their variations is intended to include the elements listed after them and their equivalents, and also additional elements. Unless otherwise specified, terms such as "mounted", "connected", "supported" and "coupled" and their variations are used in the widest sense and include both direct and indirect assemblies, connections, supports and couplings. Furthermore, the terms "connected" and "coupled" cannot be limited to physical or mechanical connections or couplings.

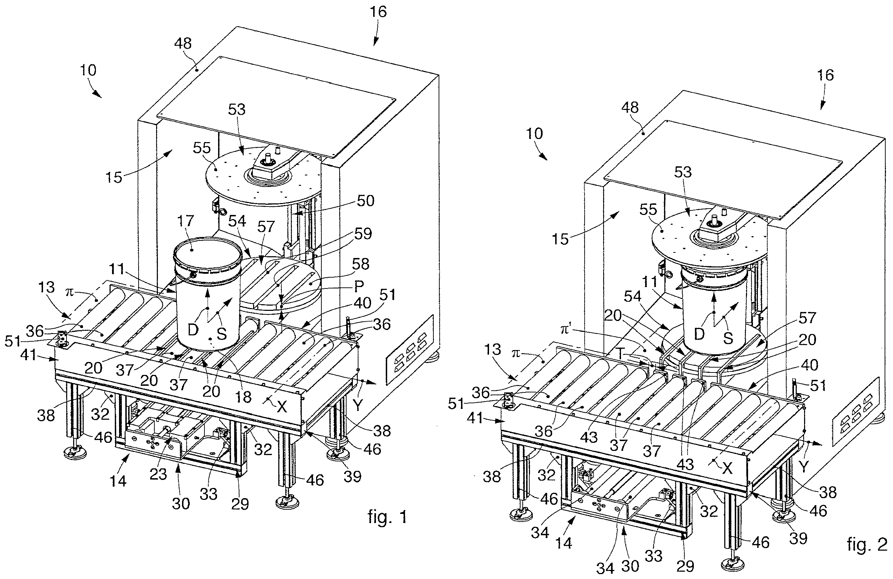

Figs. 1-4 are used to describe forms of embodiment of a movement apparatus 10, configured to move receptacles 11 containing fluid dye products. Examples of fluid dye products are liquid dyes, bases for paint, varnishes, enamels, inks or other fluid coloring substances.

The movement apparatus 10 includes a feed unit 13 configured to feed the receptacles 11 each lying with a respective bottom 18 on a feed plane Π, typically horizontal in use, and along a direction of feed Y.

The movement apparatus 10 also includes a movement device 14 configured to move the receptacles 11 from the feed unit 13 to a work unit 16 adjacent to the feed unit 13. In possible implementations, the work unit 16 can be provided with a work chamber 15, inside which the work on the receptacle 11 and/or on the product contained therein can be carried out. The work chamber 15 can be accessible by means of an aperture and can be facing toward the feed unit 13.

In some forms of embodiment, the movement device 14 can be mobile in order to lift the receptacle 11 from the feed plane Π, introduce and unload the receptacle 11 into the work unit 16, for example into the work chamber 15.

In particular, the movement device 14 includes mobile lifting elements 20, defining a movement plane Π' provided to rest against the bottom 18 of one of the receptacles 11, to pick up the receptacle 11 from the feed unit 13 by lifting it from below and moving it from the feed plane Π into the work unit 16. For example, the lifting elements 20 can be made as prongs, forks, lifting bars, lifting arms or suchlike.

In accordance with possible forms of embodiment, the lifting elements 20 are configured mobile at least between a lowered position, non-operative, in which the movement plane Π' is below the feed plane Π and a raised position, or engagement position (see for example fig. 1), in which the movement plane Π' is coplanar, or at least partly above, the feed plane Π, in order to pick up the receptacle 11 from the feed unit 13.

In particular, in the second raised position the movement plane Π' is resting against the bottom 18 of the receptacle, in order to lift it from below.

In this way, the lifting operation, being completed from below against the bottom 18, can always be carried out with the same movement device 14 and the same lifting elements 20, on any type of receptacle, irrespective of the shape and size of the receptacle, guaranteeing operating versatility and universality.

In accordance with possible implementations, the receptacle 11 can be made of plastic or metal material. Moreover, the receptacle 11 can have a circular, oval, square or rectangular cross section, or polygonal in general, or a combination of these. In particular, the receptacle 11 can be provided at the top with a lid 17 and below with the bottom 18, which delimit the extension thereof. Moreover, in possible implementations, the receptacle 11 can also be provided with or without a handle.

In accordance with possible forms of embodiment, the lifting elements 20 are also configured mobile at least between the raised position and a laterally displaced position, or unloading position, of the receptacle 11 in correspondence to the work unit 16, for example in the work chamber 15, to position inside it the receptacle 11 that has been lifted and picked up.

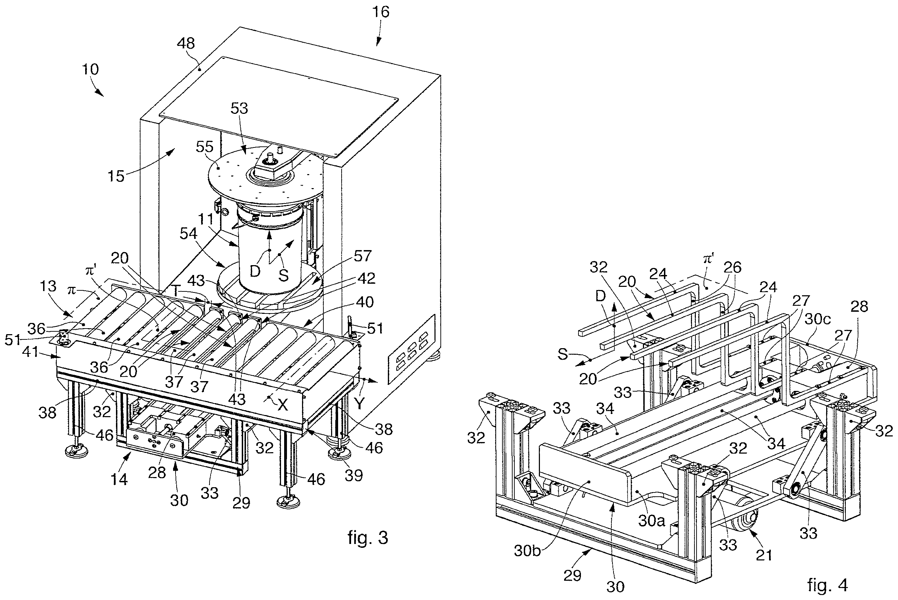

Finally, the lifting elements 20 can be returned to the rest position, according to a backward travel, under the feed plane Π (see for example fig. 3). During the backward travel, the movement plane Π' can be free, that is, without the receptacle 11, or it can return the receptacle 11 to the feed plane Π to carry out subsequent workings.

The lifting elements 20 can be disposed parallel with respect to each other and can have an oblong shape, for example like a rod, with a circular or quadrangular cross section or a combination of the above.

In some forms of embodiment, the lifting elements 20 can have a longitudinal extension that can be transverse to the direction of feed Y.

In possible forms of embodiment, a first actuation member 21 can be provided to move the lifting elements 20 in a first direction D, transverse to the feed plane Π.

The first actuation member 21 can move the lifting elements 20 in the first direction D to move the movement plane Π' with respect to the feed plane Π between the lowered position and the raised one.

Moreover, in possible forms of embodiment, a second actuation member 23 can be provided, to move the lifting elements 20 in a second direction S, transverse to the direction of feed Y.

The first 21 and the second 23 actuation members can each include a motor driven by a source of energy, for example an electric current, a hydraulic fluid pressure or a pneumatic pressure. The first 21 and second 23 actuation members can include a motor chosen from a group consisting of: an electric motor, a pneumatic motor, a hydraulic piston, a piezoelectric actuator. In possible implementations, a drive member of the type used in combination with the forms of embodiment described here can be an intrinsically linear motion actuator and can be configured so as to convert a circular motion into a linear motion. The conversion can be carried out typically through types of mechanism chosen from a group consisting of: screw actuators, such as actuators of the jackscrew type, ball screws and roll screws, or pulley actuators, for example with drums, gears, pulleys or shafts, such as a tackle with a cable, a winch, a pinion and rack unit, a chain transmission, a belt transmission, rigid chain actuators and rigid belts.

The lifting elements 20 can include first portions 24 defining the movement plane Π', second portions 26 transverse to the first portions 24 and third portions 27 transverse to the second portions 26.

In possible implementations, the movement device 14 can include a frame 29 suitable to be associated to the feed unit 13 to allow the cooperation and combined action of the movement device 14 and the feed unit 13.

The frame 29 can also include attachment brackets 32 able to be attached to the feed unit 13.

In possible implementations, the movement device 14 can include a lifting platform 30 connected to the frame 29, configured to transfer the movement of the first actuation member 21 to the lifting elements 20.

In possible implementations, the lifting platform 30 can be connected to the frame 29 in an articulated manner, for example by means of the articulation levers 33, which are able to convert or divert a linear movement in any direction of the first actuation member 21 into a linear movement in the first direction D in order to raise the lifting platform 30.

In possible implementations, the lifting platform 30 includes two guide bars 34 with a transverse development with respect to the direction of feed Y.

The guide bars 34 can support and guide slidingly a slider 28 mobile in the second direction S.

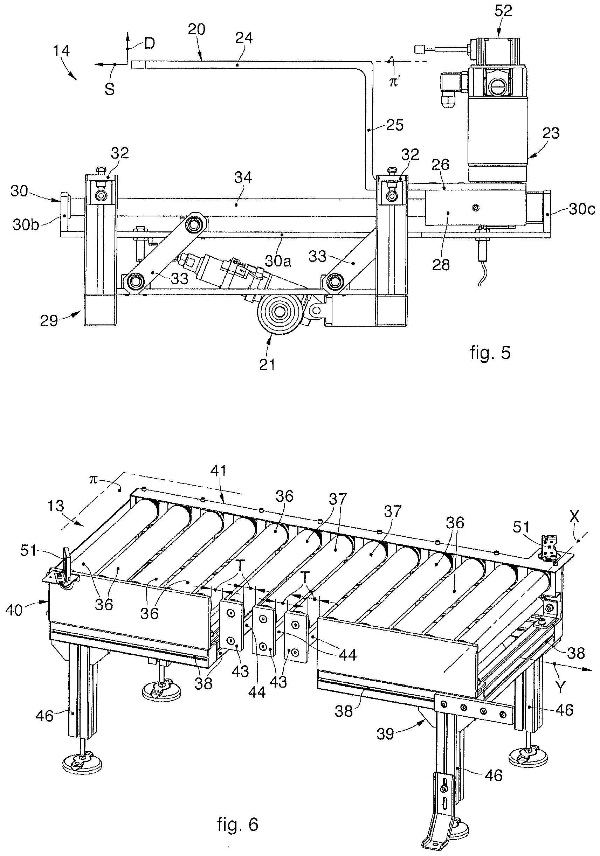

The slider 28 can be associated to the third portions 27 of the lifting elements 20, see for example figs. 4 and 5. In possible implementations, the slider 28 can be attached, for example, to the third portions 27 by releasable attachment means, for example by screws, bolts or similar releasable attachment elements, or definitive attachment means, for example by welding.

In some forms of embodiment, the slider 28 can be made to move by the second actuation member 23.

The lifting platform 30 can also include a base plate 30a and two lateral walls 30b, 30c opposite each other and attached to the base plate 30a.

In possible implementations, the two lateral walls 30b, 30c can support the guide bars 34 that can extend transverse between them (fig. 4).

In some forms of embodiment, the base plate 30a can be constrained in an articulated manner to the frame 29 by the articulation levers 33.

In some forms of embodiment, see for example figs. 4 and 5, the articulation levers 33 can be pivoted, or articulated, between the frame 29 and the base plate 30a.

The first actuation member 21 can be attached stably at one of its ends to the frame 29 and at another end to the base plate 30a.

In some forms of embodiment, the movement of the first actuation member 21, for example a linear extension, can determine the lifting of the base plate 30a, while the linear contraction of the first actuation member 21 can lead to the lowering of the base plate 30a (see for example figs. 4 and 5).

In some forms of embodiment, which can be combined with all the forms of embodiment described here, the feed unit 13 can be for example a roller unit, as shown in figs. 1-8, or a conveyor belt, or other conveying system, for example a chain.

In possible implementations, the feed unit 13 can be provided with rolls 36, 37, that can be made to rotate around an axis of rotation X transverse to the direction of feed Y. In this way, the rolls 36, 37 allow the movement of the receptacles 11 in the direction of feed Y. The feed unit 13 can be provided with a roll support frame 39 to which the rolls 36, 37 are associated.

In some forms of embodiment, the feed unit 13 can be configured so that each lifting element 20, passing from the lowered position to the raised position, is interposed between two adjacent rolls 36, 37. This disposition allows to supply to the receptacle 11, when it is resting on the feed plane Π, at least two contact rolls 36, 37 to move it along the direction of feed Y and at least two lifting elements 20 to move it in the first direction D and the second direction S.

The lifting elements 20, lifting with respect to the rolls 36, 37, define a zone of the feed plane Π that is affected by the movement device 14, that is, a zone in which the lifting elements 20 and the rolls 36, 37 cooperate with each other.

The roll support frame 39 can be formed by a plurality of profiles 38, for example, grooved profiles to allow the attachment of the attachment brackets 32 of the movement device 14.

The profiles 38 can be oriented parallel and transverse to the direction of feed Y and connected by means of welding or releasable attachment elements, such as screws, bolts or suchlike.

In some forms of embodiment, the feed unit 13 can have apertures 42 that allow the passage of the lifting elements 20 during the movement in the second direction S between the raised position and the laterally displaced position. The number and the size of the apertures 42 is coordinated with the number and size of the lifting elements 20, in particular the apertures 42 are equal in number to the lifting elements 20 and are sized in width and distanced from each other to allow the passage of the lifting elements 20.

In some forms of embodiment, the roll support frame 39 of the feed unit 13 can also be provided with lateral edges 40, 41 attached directly to the profiles 38 and with a longitudinal development in the direction of feed Y to define opposite sides of the roll support frame 39.

In some forms of embodiment, see for example fig. 5, a first lateral edge 40 can be provided, for example facing the work unit 16, and a second lateral edge 41 opposite the first lateral edge 40. In particular, the first lateral edge 40 has the apertures 42 for the passage of the lifting elements 20.

In particular the first lateral edge 40 can include support portions 43 made as separate bodies and aligned along the longitudinal development of the first lateral edge 40.

Each support portion 43 can be attached by its connection with the second lateral edge 41, obtained by support cross-pieces 44 transverse to the direction of feed Y.

The support portions 43 can be distanced from each other along the direction of feed Y according to spaces T that define the apertures 42 (see for example fig. 6). In particular, the spaces T can be suitable to allow the movement of the lifting elements 20 of the movement device 14 from and toward the work unit 16, in particular between the raised position and the laterally displaced position. The spaces T are such that they do not make the lifting elements 20 interfere, during the movement of the receptacles 11, with the first lateral edge 40.

In some forms of embodiment, the rolls 36, 37 can include first rolls 36, upstream of the movement device 14, that is, upstream of a position occupied by the receptacle 11 when aligned opposite the work unit 16, and second rolls 37 which are in correspondence with the movement device 14, that is, in correspondence with a position occupied by the receptacle 11 aligned opposite the work unit 16.

The first rolls 36 can be supported by the first 40 and second 41 lateral edges, to allow the rotation thereof around the axis of rotation X.

Instead, the second rolls 37 can be supported at one end by the second lateral edge 41 while at another end, opposite the first, by the support portions 43 of the first lateral edge 40.

In some forms of embodiment, support elements 46 can also be associated to the roll support frame 39, and are configured to determine a stable support on the ground or on a work plane and which can be adjustable in height to modify the height of the feed plane Π with respect to the ground.

In some forms of embodiment, the feed unit 13 can be provided with a centering device 52 (see for example fig. 5), which is able to detect and define the correct position of the receptacle 11 with respect to the work unit 16.

In other forms of embodiment, the feed unit 13 can be provided with photocells 51 able to periodically detect the position of the receptacle 11 with respect to the lateral edges 40, 41 and to define the position thereof in the direction of feed Y.

In possible implementations, the work unit 16 includes at least a lower plate 54 to receive the receptacles 11 to be worked, for example provided in the work chamber 15. The receptacles 11 to be worked are supplied to the lower plate 54 by the movement device 14.

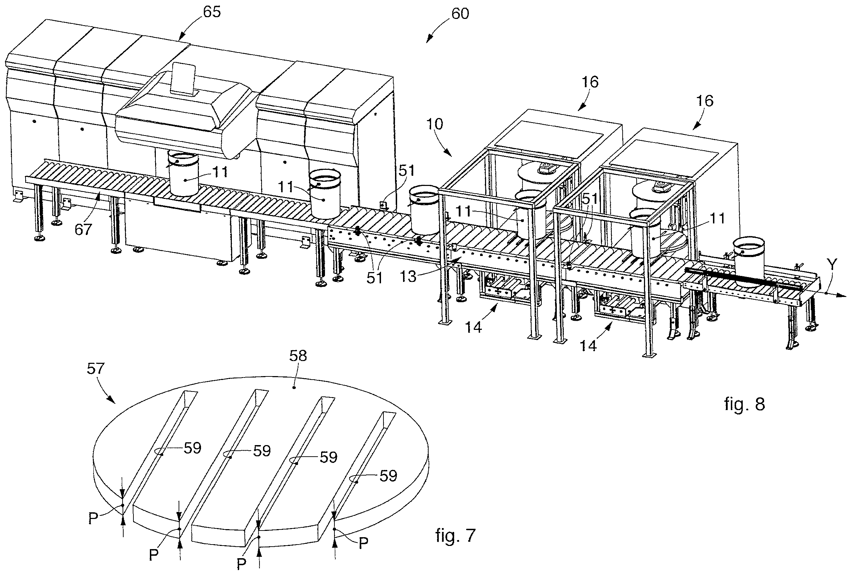

In possible forms of embodiment, the lower plate 54 includes an upper contact layer 57 on which the receptacle 11 rests. For example, the contact layer 57 can be an integrating part of the lower plate 54, or be applied as a separate body on the lower plate 54. The contact layer 57 can be provided with grooves 59 or channels or elongated housing seatings, see for example fig. 7, configured to receive the lifting elements 20 inside them. In particular, the grooves 59 can have a depth configured to receive the lifting elements 20 that move the receptacle 11 and transfer the receptacle 11 from the lifting elements 20 onto the contact layer 57. Advantageously, a lateral displacement of the lifting elements 20 is useful to allow the lifting elements 20 to be received in the grooves 59 of the lower plate 54.

In particular, the grooves 59 can be able to receive the lifting elements 20 of the movement device 14 and allow the transfer of the receptacle 11 from the movement plane Π' to the contact layer 57, without mechanical interference.

The grooves 59 can be made through in the depth P of the contact layer 57.

The grooves 59 can also have an extension along the second direction S that completely or partly crosses the surface portion 58 according to a linear profile.

The grooves 59 are suitable to receive the first portion 24 of the lifting elements 20.

In some forms of embodiment the depth P of the grooves 59 can be suitable to allow a disengagement travel of the lifting elements 20 in the first direction D to transfer the receptacle 11 from the movement plane Π' to the surface portion 58 of the contact layer 57.

In possible implementations, the depth P of the grooves 59 is at least equal to or higher than the thickness of the lifting elements 20.

Moreover, the length of the grooves 59 can be at least equal to or higher than the length of the lifting elements 20.

In this way, when the lifting elements 20 are inserted in the grooves 59, the receptacle 11 rests on the upper surface of the contact layer 57, and when, subsequently, the lifting elements 20 are extracted from the grooves 59 and returned into the raised position, the receptacle 11 is disposed on the contact layer 57, obtaining the desired transfer into the work chamber 15.

In some forms of embodiment, which can be combined with all the forms of embodiment described here, the contact layer 57 can be, for example, a mat made of a rubber material or other material with a desired friction and grip effect on the bottom 18 of the receptacle 11. This can facilitate the transfer of the receptacle 11 from the lifting elements to the contact layer 57.

The contact layer 57 can include a surface portion 58 that defines the external shape thereof and the above cited grooves 59 to allow cooperation with the movement device 14.

In possible implementations, the work unit 16 can be for example a mixing unit, or mixer, and the work carried out by it can be mixing, which can provide to carry out a cycle of mixing the fluid dye product contained in the receptacle 11 by gyroscopic or orbital rotatory movements, and for example, can include a support structure 48 and a mixing unit 50, associated inside the support structure 48.

The support structure 48 can have a substantially box-like shape and defines inside it the mixing chamber 15.

In the mixing chamber 15 a clamping unit 53 of the receptacle 11 can be at least partly disposed. The clamping unit 53 can be provided to clamp, or block the receptacle 11 so that it can be subjected to the mixing or stirring provided in the mixing unit 50.

In possible implementations, the clamping unit 53 includes a pair of clamping means, for example, the lower plate 54 that acts as lower clamping plate and an upper plate 55 that acts as upper clamping plate. The lower plate 54 and the upper plate 55 are selectively mobile reciprocally nearer to and away from each other by means of a mechanical transmission commanded by a motor unit. In the example in figs. 1-8, the lower plate 54 and the upper plate 55 are connected to thrust means, to determine the clamping action.

In possible implementations, the contact layer 57 can be disposed above the lower plate 54 and directly facing toward the upper plate 55. A contact layer 57 can also be applied on the upper plate 55, in this case on a lower surface thereof, facing during use toward the lower plate 54.

In some forms of embodiment, the contact layer 57 can also be provided to improve, during use, the engagement and adherence of the lower plate 54 and upper plate 55 with the receptacle 11 of fluid dye products.

In some forms of embodiment, fig. 8 is used to describe a work plant 60 including at least a metering unit 65 located upstream with respect to the above cited movement apparatus 10 and work unit 16.

The metering unit 65 can be configured to measure out, for example, coloring pigments and/or bases and introduce them into a base contained in the receptacles 11 or in the empty receptacles 11.

The metering unit 65 can be served by a movement unit 67 configured to move the receptacles 11 in a direction aligned with the direction of feed Y. The movement unit 67 can extend in length laterally, that is, at the side, with respect to the metering unit 65.

The movement unit 67 can for example use a plurality of rolls or conveyor belts, or chains, belts or suchlike.

The movement unit 67 can be associated to the feed unit 13 to define a single feed travel between the units.

In some forms of embodiment, fig. 8 can be used to describe a work plant 60 provided with a plurality of movement apparatuses 10. According to this variant, the movement apparatuses 10 can be installed in series, as shown in fig. 8, or in parallel.

It is clear that modifications and/or additions of parts may be made to the movement apparatus 10 as described heretofore, without departing from the scope of the present invention, which is defined by the appended claims.

It is also clear that, although the present invention has been described with reference to some specific examples, a person of skill in the art shall certainly be able to achieve many other equivalent forms of movement apparatus 10, having the characteristics as set forth in the claims and hence all coming within the field of protection defined thereby.

## Claims

1. Apparatus for moving receptacles (11) comprising:
- a feed unit (13) configured to feed said receptacles (11) each lying with a respective bottom (18) on a feed plane (Π) and in a direction of feed (Y),
- a movement device (14) configured to move said receptacles (11) from said feed unit (13) to a further unit (16) adjacent to said feed unit (13) in said direction of feed (Y),
wherein said movement device (14) comprises mobile lifting elements (20) defining a movement plane (Π') provided to rest against said bottom (18) of one of said receptacles (11), in order to pick up said receptacle (11) from said feed unit (13) by lifting it from below and moving it from said feed plane (Π) into said further unit (16), said lifting elements (20) being configured mobile at least between a lowered position in which said movement plane (Π') is below said feed plane (Π) and a raised position in which said movement plane (Π') is coplanar, or at least partly above, said feed plane (Π), to pick up said receptacle (11) from said feed unit (13), said lifting elements (20) also being configured mobile at least between said raised position and a laterally displaced position in said further unit (16),
**characterized in that** said further unit is a work unit (16) **and in that** said apparatus also comprises a lower plate (54) provided in said work unit (16) to receive said receptacle (11), said lower plate (54) comprising a contact layer (57) on which to rest said receptacle (11), provided with grooves (59) configured to receive said lifting elements (20) inside them.

2. Movement apparatus as in claim 1, **characterized in that** it is provided with a first actuation member (21) to move said lifting elements (20) in a first direction (D), transverse with respect to said feed plane (Π).

3. Movement apparatus as in claim 1 or 2, **characterized in that** it is provided with a second actuation member (23) to move said lifting elements (20) in a second direction (S), transverse with respect to said direction of feed (Y).

4. Movement apparatus as in any claim hereinbefore, **characterized in that** said lifting elements (20) comprise first portions (24) defining said movement plane (Π').

5. Movement apparatus as in any claim hereinbefore, **characterized in that** said feed unit (13) comprises first rolls (36), upstream of said movement device (14) in said direction of feed (Y), and second rolls (37) that are in correspondence to said movement device (14).

6. Movement apparatus as in claim 3, **characterized in that** said feed unit (13) has apertures (42) that allow the passage of said lifting elements (20).

7. Movement apparatus as in any claim hereinbefore, **characterized in that** said work unit (16) is a mixer.

8. System for working receptacles, comprising a work unit (16) configured to work receptacles (11) and a movement apparatus (10) as in any claim hereinbefore.

9. System for working receptacles as in claim 8, in which said work unit (16) is provided with a work chamber (15) comprising said at least one lower plate (54) to receive said receptacles (11) to be worked.

10. Method for moving receptacles (11) comprising:
- feeding said receptacles (11) by means of a feed unit (13), each receptacle (11) lying with a respective bottom (18) on a feed plane (Π) and in a direction of feed (Y),
- moving said receptacles (11), by means of a movement device (14), from said feed unit (13) to a further unit (16) adjacent to said feed unit (13) in said direction of feed (Y),
wherein said method provides to use mobile lifting elements (20) of said movement device (14), defining a movement plane (Π'), to rest against said bottom (18) of one of said receptacles (11), and to pick up said receptacle (11) from said feed unit (13) by lifting it from below and moving it from said feed plane (Π) into said further unit (16), wherein said lifting elements (20) are moved at least between a lowered position in which said movement plane (Π') is below said feed plane (Π) and a raised position in which said movement plane (Π') is coplanar, or at least partly above, said feed plane (Π), in order to pick up said receptacle (11) from said feed unit (13), said lifting elements (20) also being moved at least between said raised position and a laterally displaced position in said further unit (16),
**characterized in that** said further unit is a work unit (16) **and in that** said receptacle (11) is received on at least a lower plate (54) provided in said work unit (16), resting said receptacle (11) on a contact layer (57) of said lower plate (54), receiving said lifting elements (20) in grooves (59) of said contact layer (57).

## Patentansprüche

1. Einrichtung zum Bewegen von Behältern (11), umfassend:
- eine Beschickungseinheit (13), die dafür ausgelegt ist, die Behälter (11), die jeweils mit einem jeweiligen Boden (18) auf einer Beschickungsebene (Π) und in einer Beschickungsrichtung (Y) liegen, zu beschicken,
- eine Bewegungsvorrichtung (14), die dafür ausgelegt ist, die Behälter (11) von der Beschickungseinheit (13) zu einer weiteren Einheit (16) angrenzend an die Beschickungseinheit (13) in der Beschickungsrichtung (Y) zu bewegen,
wobei die Bewegungsvorrichtung (14) mobile Hebeelemente (20) umfasst, die eine Bewegungsebene (Π') definieren, die vorgesehen ist, um an dem Boden (18) eines der Behälter (11) anzuliegen, um den Behälter (11) durch Anheben von diesem von unten und Bewegen von diesem von der Beschickungsebene (Π) in die weitere Einheit (16) von der Beschickungseinheit (13) aufzunehmen, wobei die Hebeelemente (20) zumindest zwischen einer abgesenkten Position, in der die Bewegungsebene (Π') unterhalb der Beschickungsebene (Π) liegt, und einer angehobenen Position, in der die Bewegungsebene (Π') koplanar mit oder zumindest teilweise oberhalb der Beschickungsebene (Π) ist, beweglich gestaltet sind, um den Behälter (11) von der Beschickungseinheit (13) aufzunehmen, wobei die Hebeelemente (20) auch zumindest zwischen der angehobenen Position und einer seitlich versetzten Position in der weiteren Einheit (16) beweglich konfiguriert sind,
**dadurch gekennzeichnet, dass** die weitere Einheit eine Arbeitseinheit (16) ist und dass die Einrichtung weiterhin eine untere Platte (54) umfasst, die in der Arbeitseinheit (16) vorgesehen ist, um den Behälter (11) aufzunehmen, wobei die untere Platte (54) eine Kontaktschicht (57) umfasst, auf der der Behälter (11) abgestellt werden soll, die mit Nuten (59) versehen ist, die dafür ausgelegt sind, die Hebeelemente (20) in sich aufzunehmen.

2. Bewegungseinrichtung nach Anspruch 1, **dadurch gekennzeichnet, dass** sie mit einem ersten Betätigungsorgan (21) versehen ist, um die Hebeelemente (20) in eine erste Richtung (D) quer in Bezug auf die Beschickungsebene (Π) zu bewegen.

3. Bewegungseinrichtung nach Anspruch 1 oder 2, **dadurch gekennzeichnet, dass** sie mit einem zweiten Betätigungsorgan (23) versehen ist, um die Hebeelemente (20) in eine zweite Richtung (S) quer in Bezug auf die Beschickungsrichtung (Y) zu bewegen.

4. Bewegungseinrichtung nach einem der vorhergehenden Ansprüche, **dadurch gekennzeichnet, dass** die Hebeelemente (20) erste Abschnitte (24) umfassen, die die Bewegungsebene (Π') definieren.

5. Bewegungseinrichtung nach einem der vorhergehenden Ansprüche, **dadurch gekennzeichnet, dass** die Beschickungseinheit (13) erste Rollen (36) stromaufwärts der Bewegungsvorrichtung (14) in der Beschickungsrichtung (Y) und zweite Rollen (37) in Übereinstimmung mit der Bewegungsvorrichtung (14) umfassen.

6. Bewegungseinrichtung nach Anspruch 3, **dadurch gekennzeichnet, dass** die Beschickungseinheit (13) Öffnungen (42) aufweist, die den Durchgang der Hebeelemente (20) ermöglichen.

7. Bewegungseinrichtung nach einem der vorhergehenden Ansprüche, **dadurch gekennzeichnet, dass** die Arbeitseinheit (16) ein Mischer ist.

8. System zum Bearbeiten von Behältern, umfassend eine Arbeitseinheit (16), die dafür ausgelegt ist, Behälter (11) zu bearbeiten, und eine Bewegungseinrichtung (10) nach einem der vorhergehenden Ansprüche.

9. System zum Bearbeiten von Behältern nach Anspruch 8, wobei die Arbeitseinheit (16) mit einer Arbeitskammer (15) versehen ist, umfassend die mindestens eine untere Platte (54), um die zu bearbeitenden Behälter (11) aufzunehmen.

10. Verfahren zum Bewegen von Behältern (11), umfassend:
- Beschicken der Behälter (11) mittels einer Beschickungseinheit (13), wobei jeder Behälter (11) mit einem jeweiligen Boden (18) auf einer Beschickungsebene (Π) und in einer Beschickungsrichtung (Y) liegt,
- Bewegen der Behälter (11) mittels einer Bewegungsvorrichtung (14) von der Beschickungseinheit (13) zu einer weiteren Einheit (16) angrenzend an die Beschickungseinheit (13) in der Beschickungsrichtung (Y),
wobei das Verfahren vorsieht, mobile Hebeelemente (20) der Bewegungsvorrichtung (14) zu verwenden, die eine Bewegungsebene (Π') definieren, um an dem Boden (18) eines der Behälter (11) anzuliegen, und den Behälter (11) durch Anheben von diesem von unten und Bewegen von diesem von der Beschickungsebene (Π) in die weitere Einheit (16) aufzunehmen, wobei die Hebeelemente (20) bewegt werden zumindest zwischen einer abgesenkten Position, in der die Bewegungsebene (Π') unterhalb der Beschickungsebene (Π) liegt, und einer angehobenen Position, in der die Bewegungsebene (Π') koplanar mit der oder zumindest teilweise oberhalb der Bewegungsebene (Π) liegt, um den Behälter (11) von der Beschickungseinheit (13) aufzunehmen, wobei die Hebeelemente (20) auch zumindest zwischen der angehobenen Position und einer seitlich versetzten Position in der weiteren Einheit (16) bewegt werden,
**dadurch gekennzeichnet, dass** die weitere Einheit eine Arbeitseinheit (16) ist und dass der Behälter (11) auf mindestens einer unteren Platte (54) aufgenommen wird, die in der Arbeitseinheit (16) vorgesehen ist, wobei der Behälter (11) auf einer Kontaktschicht (57) der unteren Platte (54) abgelegt wird, wobei die Hebeelemente (20) in Nuten (59) der Kontaktschicht (57) aufgenommen werden.

## Revendications

1. Appareil pour déplacer des réceptacles (11) comprenant :
- une unité d'alimentation (13) configurée pour alimenter lesdits réceptacles (11) reposant chacun avec un fond respectif (18) sur un plan d'alimentation (Π) et dans une direction d'alimentation (Y),
- un dispositif de déplacement (14) configuré pour déplacer lesdits réceptacles (11) depuis ladite unité d'alimentation (13) vers une autre unité (16) adjacente à ladite unité d'alimentation (13) dans ladite direction d'alimentation (Y),
dans lequel ledit dispositif de déplacement (14) comprend des éléments de levage mobiles (20) définissant un plan de déplacement (Π') prévu pour reposer contre ledit fond (18) de l'un desdits réceptacles (11), afin de saisir ledit réceptacle (11) depuis ladite unité d'alimentation (13) en le soulevant par le dessous et en le déplaçant depuis ledit plan d'alimentation (Π) dans ladite autre unité (16), lesdits éléments de levage (20) étant configurés de manière à être mobiles au moins entre une position abaissée dans laquelle ledit plan de déplacement (Π') est situé au-dessous dudit plan d'alimentation (Π) et une position surélevée dans laquelle ledit plan de déplacement (Π') est coplanaire avec ledit plan d'alimentation (Π), ou au moins partiellement au-dessus de celui-ci, pour saisir ledit réceptacle (11) depuis ladite unité d'alimentation (13), lesdits éléments de levage (20) étant également configurés de manière à être mobiles au moins entre ladite position surélevée et une position décalée latéralement dans ladite autre unité (16),
**caractérisé en ce que** ladite autre unité est une unité de travail (16) et **en ce que** ledit appareil comprend également un plateau inférieur (54) agencé dans ladite unité de travail (16) pour recevoir ledit réceptacle (11), ledit plateau inférieur (54) comprenant une couche de contact (57) sur laquelle repose ledit réceptacle (11), munie de rainures (59) configurées pour recevoir lesdits éléments de levage (20) à l'intérieur de celles-ci.

2. Appareil de déplacement selon la revendication 1, **caractérisé en ce qu'**il est muni d'un premier élément d'actionnement (21) pour déplacer lesdits éléments de levage (20) dans une première direction (D), transversale par rapport audit plan d'alimentation (Π).

3. Appareil de déplacement selon la revendication 1 ou 2, **caractérisé en ce qu'**il est muni d'un second élément d'actionnement (23) pour déplacer lesdits éléments de levage (20) dans une seconde direction (S), transversale par rapport à ladite direction d'alimentation (Y).

4. Appareil de déplacement selon l'une quelconque des revendications précédentes, **caractérisé en ce que** lesdits éléments de levage (20) comprennent des premières parties (24) définissant ledit plan de déplacement (Π').

5. Appareil de déplacement selon l'une quelconque des revendications précédentes, **caractérisé en ce que** ladite unité d'alimentation (13) comprend des premiers rouleaux (36), en amont dudit dispositif de déplacement (14) dans ladite direction d'alimentation (Y), et des seconds rouleaux (37) qui sont en correspondance avec ledit dispositif de déplacement (14).

6. Appareil de déplacement selon la revendication 3, **caractérisé en ce que** ladite unité d'alimentation (13) présente des ouvertures (42) qui permettent le passage desdits éléments de levage (20).

7. Appareil de déplacement selon l'une quelconque des revendications précédentes, **caractérisé en ce que** ladite unité de travail (16) est un mélangeur.

8. Système pour travailler des réceptacles, comprenant une unité de travail (16) configurée pour travailler des réceptacles (11) et un appareil de déplacement (10) comme dans n'importe quelle revendication ci-dessus.

9. Système pour travailler des réceptacles selon la revendication 8, dans lequel ladite unité de travail (16) est munie d'une chambre de travail (15) comprenant ladite au moins une plaque inférieure (54) pour recevoir lesdits réceptacles (11) à travailler.

10. Procédé de déplacement de réceptacles (11) comprenant les étapes consistant à :
- alimenter lesdits réceptacles (11) au moyen d'une unité d'alimentation (13), chaque réceptacle (11) reposant avec un fond respectif (18) sur un plan d'alimentation (Π) et dans une direction d'alimentation (Y),
- déplacer lesdits réceptacles (11), au moyen d'un dispositif de déplacement (14), depuis ladite unité d'alimentation (13) vers une autre unité (16) adjacente à ladite unité d'alimentation (13) dans ladite direction d'alimentation (Y),
dans lequel ledit procédé consiste à utiliser des éléments de levage mobiles (20) dudit dispositif de déplacement (14), définissant un plan de déplacement (Π'), pour reposer contre ledit fond (18) de l'un desdits réceptacles (11), et pour saisir ledit réceptacle (11) depuis ladite unité d'alimentation (13) en le soulevant par le dessous et en le déplaçant depuis ledit plan d'alimentation (Π) dans ladite autre unité (16), lesdits éléments de levage (20) étant déplacés au moins entre une position abaissée dans laquelle ledit plan de déplacement (Π') est situé en dessous dudit plan d'alimentation (Π) et une position surélevée dans laquelle ledit plan de déplacement (Π') est coplanaire avec ledit plan d'alimentation (Π), ou au moins partiellement au-dessus de celui-ci, afin de saisir ledit réceptacle (11) depuis ladite unité d'alimentation (13), lesdits éléments de levage (20) étant également déplacés au moins entre ladite position surélevée et une position déplacée latéralement dans ladite autre unité (16),
**caractérisé en ce que** ladite autre unité est une unité de travail (16) et **en ce que** ledit réceptacle (11) est reçu sur au moins une plaque inférieure (54) agencée dans ladite unité de travail (16), reposant ledit réceptacle (11) sur une couche de contact (57) de ladite plaque inférieure (54), recevant lesdits éléments de levage (20) dans des rainures (59) de ladite couche de contact (57).
